# FASCICULE DE BREVET EUROPEEN

(11) **EP 0 694 600 B1**
(45) Date de publication et mention de la délivrance du brevet: **28.04.1999**
(21) Numéro de dépôt: 95830306.7
(22) Date de dépôt: 14.07.1995
(51) Int. Cl.: C10G 1/10

(54) **Procédé et installation pour la production de substances combustibles**
Verfahren und Vorrichtung für die Herstellung von Brennstoffen
Process and installation for the production of fuels

(30) Priorité: 28.07.1994 IT FI940146
(43) Date de publication de la demande: 31.01.1996
(73) Titulaire: Mencarelli, Renato, 53043 Asciano (SI) (IT); Fini, Alessia, 58022 Follonica (Grosseto) (IT); Fini, Alessandra, Firenze (IT); Fini, Franco, 58022 Follonica (Grosseto) (IT); Romana Maceri Centro Italia s.r.l., Pino Comun de Civitella (Val di Chiana) (IT)
(72) Inventeur: Mencarelli, Renato, I-53043 Asciano, Siena (IT); Fini, Alessia, I-58022 Follonica, Grosseto (IT); Fini, Alessandra, I-58022 Follonica, Grosseto (IT)
(74) Mandataire: Martini, Lazzaro

(56) Documents cités:
- EP-A- 0 426 926
- EP-A- 0 535 253
- DE-C- 4 329 435

## Description

La présente invention a pour objet un procédé et une installation pour la production de substances combustibles par destruction thermique de pneus usés.

Il est connu que l'élimination des pneus usés représente un problème fortement ressenti au niveau international, à la fois pour l'importante source de pollution pour l'environnement et la santé qu'ils représentent et pour les risques d'incendies dérivant de leur présence sur le territoire.

Il est également connu que ces pneus contiennent de grandes quantités d'hydrocarbures et, bien qu'en proportions mineures, de matières métalliques et que le pouvoir calorifique inférieur des pneus, qu'ils soient obtenus par synthèse de substance dérivées du pétrole ou à du caoutchouc naturel, varie substantiellement entre 28 et 32 MJ/Kg.

Par ailleurs, du fait que la combustion incontrôlée du caoutchouc à basse température entraîne la production de fumées noires et polluantes en raison de l'abondante quantité de particules et d'hydrocarbures imbrûlés qu'elles contiennent, il est nécessaire de procéder à un contrôle attentif et constant de la combustion de la masse caoutchouteuse, ce qui, jusqu'à présent, a entraîné la réalisation d'installations complexes, caractérisées par des coûts d'installation et de fonctionnement élevés, lesquels requièrent, en outre, la présence de personnel hautement spécialisé.

EP- A- 0 535 253 décrit un procédé catalytique pour la production d'huiles combustibles et de gaz de cracking à partir de gomme usée en utilisant un catalyseur spécifique. La température est amenée à 280°C et la réaction se passe sous pression.

EP- A- 0 426 926 décrit un procédé de destruction de pneus usés pour la production de noir de carbone. Les résidus non récupérables de ce procédé sont vitrifiées au moyen d'une torche à plasma. La destruction est réalisée sous vide en soumettant les pneus à un chauffage progressif entre 150 et 450°C.

Le but principal de la présente invention est de proposer un procédé et une installation simple et automatique pour produire des substances combustibles en utilisant des pneus usés.

Ce résultat a été atteint, conformément à l'invention, en adoptant l'idée de réaliser un système comprenant, essentiellement, des moyens automatiques pour la destruction thermique des pneus et des moyens automatiques pour la combustion des produits combustibles dérivant de la précédente destruction thermique, de manière à obtenir une partielle dépolymérisation du caoutchouc par oxygénolyse avec une présence de vapeur d'eau à une température comprise par exemple entre 120 et 130°C dans un milieu à une pression inférieure à la pression atmosphérique et obtenir ainsi un mélange de gaz brûlé et vapeur d'eau entraînant des substances combustibles à base d'hydrogène et de carbone principalement sous forme de particules et/ou brouillard de caoutchouc, c'est- à- dire de particules microscopiques solides et/ou liquides combustibles dérivant de ladite partielle dépolymérisation susceptibles d'une combustion complète et immédiate.

Les avantages obtenus grâce à la présente invention consistent essentiellement en ce qu'il est possible d'obtenir une bonne production de substances combustibles, de manière économique, sûre, automatique et relativement simple, en réalisant en même temps l'élimination de grandes quantités de pneus usés, ce qui permet d'éliminer effectivement une source de pollution d'importance primordiale pour l'environnement, mais sans dégager de substances polluantes dans l'atmosphère; en ce qu'il est possible de récupérer une bonne partie des matières métalliques contenues dans les pneus ainsi traités; en ce qu'une installation, conformément à l'invention, est de fabrication relativement simple, économique et fiable, même après une longue période de fonctionnement.

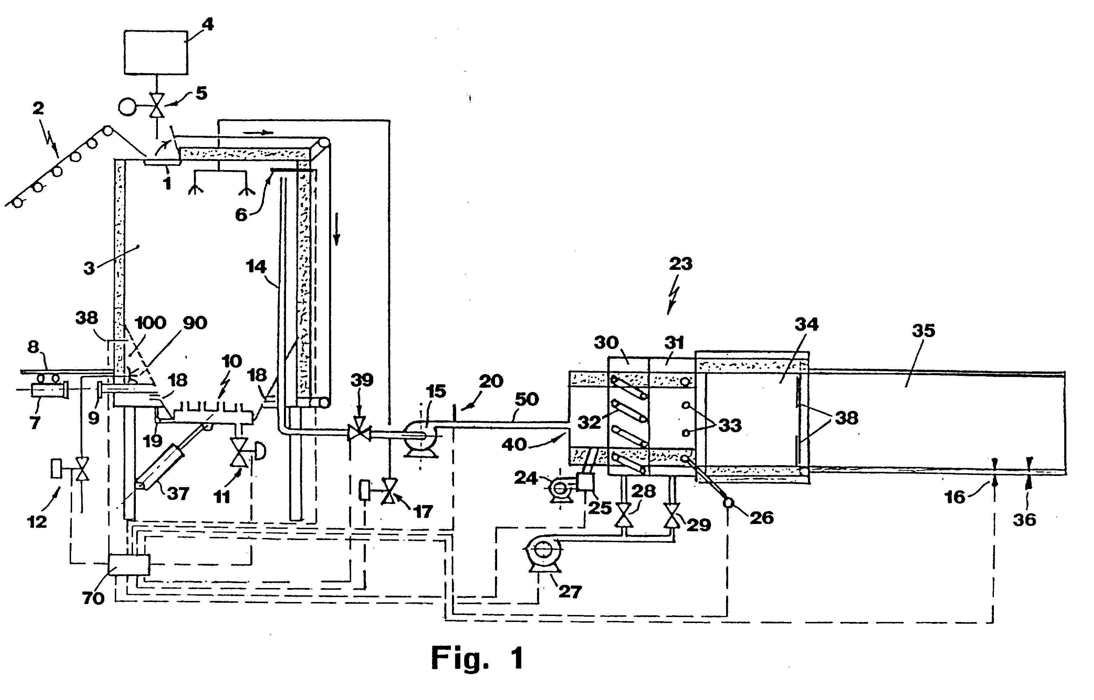

Ces avantages et caractéristiques de l'invention ainsi que d'autres seront plus et mieux compris de chaque homme du métier à la lumière de la description qui va suivre et à l'aide du dessin annexé qui illustre l'invention sans toutefois la limiter; le dessin sur lequel la Fig. 1 représente schématiquement une installation pour la production de substances combustibles conformément à l'invention.

Réduit à sa structure essentielle et en référence à la figure (...) annexée, un procédé pour la production de substances combustibles, en particulier sous forme de particules et/ou "brouillard de caoutchouc", conformément à l'invention, comprend une étape au cours de laquelle une quantité prédéterminée de pneus est soumise à une réaction de dépolymérisation dans des conditions de pression et température contrôlées de manière appropriée, c'est- à- dire variables dans des limites prédéterminées, dans lequel, avant de démarrer ladite phase de dépolymérisation, il est prévu d'ajouter auxdits pneus une quantité prédéterminée d'oxyde de calcium. La pression à laquelle la réaction de dépolymérisation est réalisée est inférieure de 10 à 40 mBar par rapport à la pression atmosphérique externe. L'expression "brouillard de caoutchouc" désigne un ensemble de microparticules de caoutchouc à l'état liquide en suspension dans en fluide gazeux.

Avantageusement, conformément à l'invention, le milieu dans lequel est effectuée ladite réaction de dépolymérisation est enrichi en vapeur d'eau saturée, lorsque dans une partie prédéterminée du milieu réactionnel la température est supérieure à 100°C.

Avantageusement, conformément à l'invention, ledit oxyde de calcium est ajouté à raison de 1% et 3% en poids des pneus à traiter.

Avantageusement, conformément à l'invention, la température du processus de destruction thermique est comprise entre 120 et 130°C.

Conformément à l'invention la température du procédé de destruction thermique est plus généralement choisie même entre 100°C et 130°C.

Avantageusement, conformément à l'invention, les substances produites par ledit processus de dépolymérisation sont prélevées par aspiration forcée, comprimées et envoyées à la combustion.

Avantageusement, conformément à l'invention, il est prévu d'envoyer sur les pneus en cours de traitement de l'air et/ou vapeur d'eau en quantités prédéterminées pour régler la quantité et/ou la température des substances combustibles produites .

Avantageusement, conformément à l'invention, il est prévu d'envoyer de l'eau pulvérisée dans milieu dans lequel est effectuée ladite destruction thermique, au cas où la température des substances en aval dudit milieu dépasse 170°C. Cette dernière valeur de température peut être quand- même diminuée, par exemple à 130°C de manière à être égale à la valeur limite supérieure de la température de la réaction de dépolymérisation.

Avantageusement, conformément à l'invention, il est prévu de contrôler avec des moyens optiques l'existence de la combustion des substances combustibles produites lors de la dépolymérisation dans un milieu alimenté avec de l'air comburant soumis à un mouvement tourbillonnaire.

Il est aussi prévu d'acquérir des données relative au procédé et d'élaborer des signaux pour commander les organes actionneurs de l'installation au moyen d'un logiciel placé dans un ordinateur.

D'autre part un objet de l'invention est une installation pour mettre en oeuvre le procédé précité. Cette installation comprend:
- au moins un dispositif de dépolymérisation (3) alimenté par le haut avec les pneus à traiter, lesquels sont introduits dans le dispositif (3) à travers une trappe (1) et transportés jusqu'à celle- ci au moyen d'un transporteur à bande (2); ledit dispositif de dépolymérisation étant équipé dans sa partie inférieure d'une trémie d'évacuation des résidus, de manière à former entre sa paroi interne et la trémie un espace intermédiaire (100) avec une pluralité de conduits (18) de petit diamètre de communication entre l'espace intermédiaire (100) et la chambre de dépolymérisation (3);
- un brûleur (7) pour amorcer la combustion des pneus, lequel est placé à proximité du fond du dispositif de dépolymérisation (3) et supporté par un guide (8) coulissant du et vers le dispositif de dépolymérisation (3), pour permettre son introduction sur commande dans la chambre de ce dernier, à travers une ouverture (9) prévue de manière appropriée à une hauteur prédéterminée par rapport au fond du dispositif de dépolymérisation (3), en fonction de la température relevée par une sonde (6) disposée à proximité de la partie supérieure du dispositif de dépolymérisation (3);
- une pluralité de buses (10) pour l'introduction d'air dans le dispositif de destruction thermique (3), lesquelles sont asservies à une vanne automatique (11) pour permettre la régulation du débit d'air transmis par les buses (10) de manière à régler le débit des substances combustibles en sortie du dispositif de dépolymérisation (3); l'augmentation du débit d'air des buses (10) augmente le débit des substances combustibles à la sortie du dispositif de dépolymérisation (3) et inversement;
- plusieurs buses de pulvérisation (90) logées dans l'espace intermédiaire (100) du dispositif de dépolymérisation (3), lesquelles sont commandées par une électrovanne (12) pour permettre la pulvérisation d'eau, à l'intérieur de l'espace intermédiaire (100) lorsque la température de cet espace arrive à une valeur prédéterminée, par exemple 100°C, température relevée par une sonde (38) placée dans ledit espace. L'eau pulvérisée par les buses (90) en se vaporisant à l'intérieur de l'espace intermédiaire (100) absorbe la chaleur produite par la dépolymérisation des pneus et permet de réduire la température des produits combustibles à la sortie du dispositif de dépolymérisation (3), cette température étant relevée par la sonde (6) laquelle commande à son tour l'électrovanne (12). L'eau ainsi pulvérisée et vaporisée empêche, en combinaison avec l'oxyde de calcium, la formation de vapeurs acides;
- un récipient (4) pour contenir de l'oxyde de calcium, lequel est équipé d'un distributeur- doseur (5) pour introduire dans ledit dispositif de destruction thermique une quantité appropriée d'oxyde de calcium simultanément à l'introduction des pneus à traiter;
- un conduit (14) pour l'aspiration des substance combustibles chaudes produites par la dépolymérisation des pneus, lequel est relié à une vanne à trois sorties (39), apte à recevoir le produits à la sortie d'un éventuel deuxième dispositif de dépolymérisation parallèle à celui (3) précité, et à un aspirateur (15) externe au dispositif de dépolymérisation: ledit aspirateur, en coopération avec le conduit (14), étant apte à maintenir l'intérieur du dispositif de dépolymérisation (3) à une pression inférieure à la pression atmosphérique;
- une chambre de combustion (23) en aval dudit aspirateur (15), laquelle est équipée d'un brûleur auxiliaire indépendant (25) associé à un ventilateur (24): ledit brûleur (25) étant alimenté avec un combustible différent de celui produit dans le dispositif de dépolymérisation (3) et asservi à une cellule photo- électrique (26) destinée à détecter la présence d'une flamme dans la chambre de combustion (23), due à la combustion des substances produites dans le dispositif de destruction thermique (3), de manière à provoquer le déclenchement du brûleur (25) en cas d'extinction de ladite flamme dans la chambre de combustion (23). Ledit brûleur (25) activé au début du cycle de travail permet le préchauffage de la chambre de combustion (23), et empêche l'échappement de particules froides ayant une couleur typique noirâtre;
- un ventilateur à vitesse variable (27) pour introduire de l'air comburant, primaire et secondaire, à travers des électrovannes correspondantes (28, 29) dans des chambres de distribution de l'air (30, 31) coaxiales par rapport à la chambre de combustion (23) et reliées à celle- ci par l'intermédiaire de canaux radiaux (32, 33): l'axe des premiers (32) étant (...) inclinés par rapport à l'axe de la chambre de combustion (23) de manière à imprimer à l'air qu'ils amènent un mouvement rotatoire substantiellement dirigé vers la section de sortie de la chambre de combustion (23) et les deuxièmes étant orientés de manière à être convergents vers la section de sortie de la chambre de combustion (23);
- des moyens électroniques (...) programmables (70) de manière appropriée, connus en soi des techniciens experts dans le domaine de l'automation industrielle et qui ne sont, par conséquent, pas décrits plus en détails, pour commander les organes opérationnels mentionnés ci- dessus suivant un programme d'interventions prédéterminées en fonction de la nature des différentes phase à mettre en oeuvre.

L'installation peut aussi comprendre une chambre (34) d'expansion de la flamme située en aval de la chambre de combustion (23) et reliée à un conduit (35) pour amener les produits chauds de la combustion à la sortie de la chambre de combustion (23) vers l'utilisateur à alimenter. Pour augmenter la vitesse de sortie desdits produits de combustion, il est prévu de recourir à une couronne circulaire (38) disposée dans la section de sortie de la chambre (34);

Dans la Fig. 1 (...) sont schématiquement représentées, avec par des traits discontinus, les lignes de communication entre le dispositif de contrôle programmable (70) et les organes opérationnels de l'installation.

Il va se soi que ladite installation peut comprendre deux ou plus de deux chambres de dépolymérisation (3) du type décrit ci- dessus, reliées entre elles, en amont de l'aspirateur (15), au moyen d'une vanne automatique à plusieurs voies (39). De cette manière, il est possible d'assurer la continuité de l'alimentation de la chambre de combustion (23), même lorsqu'un des dispositifs de dépolymérisation (3) est arrêté.

Avantageusement, conformément à l'invention, ledit distributeur (5) est réglable, de manière à introduire dans le dispositif de dépolymérisation (3) une quantité d'oxyde de calcium égale à 1%- 3% en poids des pneus à traiter.
Avantageusement, conformément à l'invention, la (...) sonde (6) est constituée par un thermocouple.
Avantageusement, conformément à l'invention, le (...) moteur du ventilateur (27) est asservi à un variateur de fréquence qui est lui- même commandé par un dispositif approprié (16) de mesure de la concentration d'oxygène et oxyde de carbone dans les produits à la sortie de la chambre de combustion (23). Le dispositif (16) est disposé en aval de la chambre de combustion (23) , pour régler le débit de l'air comburant en fonction de la teneur d'oxygène et/ou oxyde de carbone dans lesdits produits de combustion.

Il est également avantageusement prévu une sonde (20) pour relever la température des substances à la sortie de l'aspirateur (15). Avantageusement, conformément à l'invention, ledit aspirateur (15) est relié à la chambre de combustion (23) au moyen d'un conduit (50) dont l'extrémité au niveau la chambre (23) est munie d'une buse (40). L'aspirateur (15) est avantageusement relié audit conduit (50) par l'intermédiaire d'un joint de dilatation.

Au cas où la température relevée par la sonde (6) est supérieure à 130°C, l'activation d'une électrovanne (17) est commandée pour injecter de l'eau, par le haut, sur les pneus du dispositif de destruction thermique (3). Dans le cas où la température relevée par la sonde (20) est supérieure à 170°C, la fermeture de la vanne (11) est commandée, de sorte que l'alimentation de la chambre de combustion (23) est obtenue, à travers la buse (40) précitée, au moyen d'un courant de vapeur d'eau qui amène les substances combustibles produites dans le dispositif de dépolymérisation (3), et aspirées dans le tube (14) au moyen du ventilateur (15). De cette manière, il est possible de garantir dans chaque situation un écoulement minimum de substances combustibles.

Avantageusement, conformément à l'invention, le fond du dispositif de dépolymérisation (3) comprend une trappe (19) asservie à un cylindre actionneur (37) pour l'évacuation périodique des cendres et des résidus métalliques du dispositif de destruction thermique (3).

Le processus thermochimique réalisé dans le dispositif de dépolymérisation (3) à une température allant de 100- 130°C et à une pression de 10-40 mBar inférieure à la pression atmosphérique extérieure - la température de fusion du caoutchouc étant proche de 125°C - consiste en une dépolymérisation partielle en oxygénolyse du caoutchouc contenu dans les pneus, ainsi que dans d'autres produits à base de caoutchouc introduits dans le dispositif de dépolymérisation. Ceci permet de produire un mélange de gaz brûlés qui en combinaison avec à la vapeur d'eau est utilisé pour amener la température de la masse à la température de fonctionnement et permet la formation de différents combustibles à base d'hydrogène et de carbone principalement présent sous forme de particules et/ou de brouillard de caoutchouc, c'est- à- dire de particules microscopiques solides et/ou liquides combustibles dérivant de la dépolymérisation du caoutchouc, susceptibles d'une combustion complète et immédiate, non polluante. Avec l'installation décrite ci- dessus, la réaction de dépolymérisation du caoutchouc est amorcée à l'aide du brûleur (7), c'est- à- dire en utilisant une source de chaleur externe au dispositif de dépolymérisation (3), de manière à brûler une petite partie des pneus qui y sont introduits. Ensuite, la réaction de dépolymérisation est auto- alimentée du fait de l'injection d'air et donc par oxydation d'une modeste quantité des substances combustibles produites. Les produits de cette oxydation- combustion servent tout d'abord à porter et ensuite à maintenir la température de dépolymérisation à une température proche de la température de fusion des polymères contenus dans les pneus, indépendamment de la demande en substances combustibles produites requises par les utilisateurs. L'eau pulvérisée qui se transforme en vapeur permet non seulement de contrôler la température de la réaction de dépolymérisation dans le dispositif de dépolymérisation (3) et mais aussi d'empêcher, en combinaison avec l'oxyde de calcium, la formation et la sortie des vapeurs acides La vapeur d'eau devient un fluide porteur qui dans la chambre de combustion (23) améliore la qualité de la flamme. En effet, la vapeur d'eau dans la chambre de combustion (23) intervient dans une réaction de pyrolyse qui facilite la combustion des substances présentes.

Les principaux résidus issus du processus de dépolymérisation - fer, carbone et zinc - tendent progressivement à se déposer dans la partie inférieure du dispositif de dépolymérisation et restent pratiquement inaltérés, étant donnés leurs points de fusion (...) qui sont respectivement de 1300- 1400°C pour le fer, de plus de 3600°C pour le carbone et d'environ 420°C pour le zinc.

L'espace intermédiaire (100) précité remplit une triple fonction: la première consiste à permettre l'introduction de vapeur saturée nécessaire pour le développement de la réaction chimique décrite ci- après, la deuxième consiste à modérer la température du processus thermochimique en cours et la troisième consiste, même en l'absence d'air passant à travers la vanne (11), à alimenter en fluide porteur pour les substances combustibles produites dans le dispositif de dépolymérisation (3), c'est- à- dire en vapeur.

Les substances combustibles ainsi produites, diluées dans le gaz brûlé nécessaire à la dépolymérisation du caoutchouc, l'azote de l'air et la vapeur d'eau, sont aspirées par l'aspirateur (15). De là, après une compression de 1 - 20 mBar, elles sont envoyées vers la chambre de combustion (23). Elles peuvent être utilisées dans n'importe quelle chambre de combustion appropriée pour subir la combustion complète en remplaçant, ou même en intégrant, le combustible utilisé à ce moment. Alternativement, elles peuvent être introduites dans un milieu préchauffé de manière appropriée et subir la combustion de manière autonome pour produire des gaz brûlés à haute température comprise entre 600 et 1400°C, pour être utilisées de n'importe quelle manière, par exemple pour produire de la vapeur.

L'air comburant envoyé à la chambre de combustion (23) peut être de l'air provenant de processus agro- industriels et devant être purifié à haute température pendant un temps prédéterminé. Pour mesurer la température des produits à la sortie de la chambre de combustion (23), il est prévu une sonde (36) disposée au niveau du conduit (35)

Les polymères contenus dans les pneus utilisés pour alimenter le dispositif de dépolymérisation (3) contiennent des quantités variables de chlore qui se dégage du caoutchouc au cours de sa (...) dépolymérisation. Pour ramener à des valeurs acceptables la teneur en chlore des fumées à la sortie de la chambre de combustion (23), les pneus sont aspergés d'oxyde de calcium, de manière à produire, avec la vapeur provenant de la dépolymérisation elle- même ou introduite à travers les conduits (18) de l'espace intermédiaire (100) lorsque la température dans cet espace est supérieure à 100°C, de l'hydroxyde de calcium. L'hydroxyde de calcium, en se liant au chlore, forme du chlorure de calcium, c'est- à- dire un sel inerte qui se dépose en même temps que les résidus métalliques.

Le brûleur (25) est avantageusement du type à démarrage automatique et pouvant être actionné au cas où la quantité de substances combustibles envoyées à la chambre de combustion (23) serait insuffisante pour garantir la combustion. La mise en service du brûleur est cependant le signe d'une production insuffisante de combustible, provoquée par exemple par épuisement du caoutchouc dans le dispositif de dépolymérisation (3).

Le fonctionnement en dépression du dispositif de dépolymérisation (3) facilite la formation des particules et/ou du brouillard de caoutchouc et permet de réduire légèrement la température de fusion du caoutchouc, ce qui rend l'installation particulièrement sûre également du point de vue de l'environnement, du fait que toute évacuation de particules noires est éliminée.

En outre, l'automatisation pratiquement complète de l'installation permet de réduire de façon draconienne l'intervention de personnel spécialisé, ce qui permet de réduire son coût de fonctionnement.

Les résidus principaux de la destruction thermique des pneus sont constitués essentiellement de matières métalliques et représentent environ 30% en poids des pneus. Le fer, qui se présente sous forme d'enchevêtrement de fils fins, peut être facilement séparé des autres résidus suivant un procédé bien connu des techniciens du secteur. Le zinc se présente sous forme d'oxyde, mélangé avec du carbone et d'autres composants comprenant le chlorure de calcium, et il peut être utilisé après un traitement approprié, également connu en soi des techniciens du secteur, et qui n'est donc pas décrit dans la présente demande.

Il va de soi que la chambre de combustion (23) peut être prévu peut être remplacée par n'importe quel autre dispositif d'emploi des substances combustibles produites dans la chambre (3).

## Revendications

1. Procédé pour la production de substances combustibles caractérisé en ce qu'il consiste à dépolymériser le caoutchouc d'une quantité prédéterminée de pneus dans un dispositif de dépolymérisation sous une pression de 10 à 40 mBar inférieure à la pression atmosphérique et à une température comprise entre 100 et 130°C, le contrôle de la dite température de dépolymérisation étant obtenu par l'injection d'air au cas où la dite température descendrait en dessous de 100°C et la pulvérisation de vapeur d'eau au cas où la dite température dépasserait 130°C, et en ce que la dépolymérisation est précédée par l'ajout d'une quantité prédéterminée d'oxyde de calcium.

2. Procédé selon la revendication 1 caractérisé en ce que le milieu réactionnel dans lequel la dite réaction de dépolymérisation est réalisée est enrichi en vapeur d'eau saturée lorsque dans une partie prédéterminée du milieu réactionnel la température est supérieure à 100°C.

3. Procédé selon la revendication 1 caractérisé en ce que ledit oxyde de calcium est ajouté à raison de 1% et 3% en poids des pneus à traiter.

4. Procédé selon la revendication 1 caractérisé en ce que les substances produites par la dépolymérisation sont prélevées par aspiration forcée, comprimées et envoyées à la combustion.

5. Procédé selon la revendication 1 caractérisé en ce que l'injection d'air (11) dans le dispositif de dépolymérisation (3) est interrompue quand la température des substances produites par la dépolymérisation en aval du dispositif de dépolymérisation et en amont de la chambre de combustion (23) dépasse 170°C.

6. Procédé selon la revendication 1 caractérisé en ce qu'il comprend le contrôle avec des moyens optiques de l'existence de la combustion des substances combustibles issues de ladite dépolymérisation dans la chambre de combustion.

7. Installation pour la production de substances combustibles, selon le procédé d'une ou plusieurs des revendications précédentes caractérisé en ce que comprend:
- un dispositif de dépolymérisation (3) alimenté par le haut avec les pneus à traiter, lesquels sont introduits dans le dispositif (3) à travers une trappe (1) et transportés jusqu'à celle- ci au moyen d'un transporteur à bande (2): ledit dispositif étant équipé dans sa partie inférieure d'une trémie d'évacuation des résidus,
de manière à former entre sa paroi interne et la trémie un espace intermédiaire (100) avec un pluralité de conduits (18) de petit diamètre de communication entre l'espace intermédiaire (100) et la chambre du dispositif de dépolymérisation (3);
- un brûleur (7) pour amorcer la combustion des pneus,
- une pluralité de buses (10) pour l'introduction d'air dans le dispositif de dépolymérisation (3), lesquelles sont asservies à une vanne automatique (11) pour permettre la régulation du débit d'air transmis par les buses (10),
- une pluralité de buses de pulvérisation (90) logées dans l'espace intermédiaire (100) du dispositif de dépolymérisation (3), lesquelles sont commandées par une électrovanne (12) pour permettre la pulvérisation d'eau, à l'intérieur de l'espace intermédiaire (100) lorsque la température de cet espace arrive à une valeur prédéterminée relevée par une sonde (38) placée dans ledit espace, et provoquer une diminution de la température intérieure dans le dispositif de dépolymérisation lorsque cette dernière dépasse une valeur prédéterminée et relevée par une sonde correspondante (6),
- un récipient (4) pour contenir de l'oxyde de calcium, lequel est équipé d'un distributeur- doseur (5) pour introduire dans ledit dispositif de dépolymérisation une quantité appropriée d'oxyde de calcium simultanément à l'introduction des pneus à traiter,
- un conduit (14) pour l'aspiration des substances combustibles produites par la dépolymérisation des pneus, lequel est relié à une vanne automatique (39) à trois sorties et à un aspirateur (15) externe au dispositif de dépolymérisation, ledit aspirateur, en coopération avec le conduit (14), étant apte à maintenir l'intérieur du dispositif de dépolymérisation (3) à une pression inférieure à la pression atmosphérique,
- une chambre de combustion (23) en aval dudit aspirateur (15), laquelle est équipée d'un brûleur auxiliaire indépendant (25) associé à un ventilateur (24): ledit brûleur (25) étant alimenté avec un combustible différent de celui produit dans le dispositif de dépolymérisation (3) et asservi à une cellule photo- électrique (26) destinée à détecter la présence d'une flamme dans la chambre de combustion (23), de manière à provoquer le déclenchement du brûleur (25) en cas d'extinction de ladite flamme dans la chambre de combustion (23),
- un ventilateur à vitesse variable (27) pour introduire de l'air comburant à travers des électrovannes correspondantes (28, 29) dans des chambres de distribution de l'air (30, 31) coaxiales par rapport à la chambre de combustion (23) et reliées à celle- ci par l'intermédiaire de canaux radiaux (32, 33), l'axe des premiers (32) étant disposés de manière à imprimer à l'air un mouvement rotatoire substantiellement dirigé vers la section de sortie de la chambre de combustion (23),
- des moyens électroniques programmables (70) pour l'acquisition et l'élaboration des données du procédé et pour la commande des organes opérationnels.

8. Installation selon la revendication 7 caractérisée en ce qu'elle comprend une chambre (34) d'expansion et une couronne circulaire (38) d'accélération des produits à la sortie de la chambre de combustion (23) et un conduit (35) pour amener les produits chauds de la combustion de la sortie de la chambre de combustion (23) vers l'utilisateur à alimenter.

9. Installation selon la revendication 7 caractérisée en ce que ledit distributeur (5) est réglable, de manière à introduire dans le dispositif de dépolymérisation (3) une quantité d'oxyde de calcium égale à 1%- 3% en poids des pneus à traiter.

10. Installation selon la revendication 7 caractérisée en ce que le moteur dudit ventilateur (27) est asservi à un variateur de fréquence qui est lui- même commandé par un dispositif approprié de mesure (16) de concentration d'oxygène et oxyde de carbone dans les fumées.

11. Installation selon la revendication 10 caractérisée en ce qu'elle comprend une sonde (20) pour relever la température des substances à la sortie de l'aspirateur (15).

12. Installation selon la revendication 7 caractérisée en ce que le fond de la trémie du dispositif de dépolymérisation est formé par une trappe (19) asservie à un cylindre actionneur (37) pour l'évacuation périodique des cendres et des résidus métalliques du dispositif de dépolymérisation (3).

13. Installation selon la revendication 7 caractérisée en ce que aspirateur (15) est relié à la chambre de combustion (23) au moyen d'un conduit (50) dont l'extrémité au niveau la chambre (23) est munie d'une buse (40).

## Patentansprüche

1. Verfahren zur Herstellung von brennbaren Substanzen, **dadurch gekennzeichnet, daß** es darin besteht, Kautschuk in einer vorgegebenen Menge von Reifen in einer Depolimerisationseinrichtung unter einem Druck von 10 bis 40 mbar unter dem Atmosphärendruck und bei einer Temperatur zwischen 100°C und 130°C zu depolimerisieren, wobei die Steuerung der Depolimerisationstemperatur durch die Injektion von Luft für den Fall erzielt wird, daß diese Temperatur unter 100°C absinkt, und durch die Zerstäubung von Wasserdampf für den Fall, daß diese Temperatur 130°C überschreitet, und daß der Depolimerisation die Zugabe einer vorbestimmten Menge von Calciumoxyd vorausgeht.

2. Verfahren nach Anspruch 1, **dadurch gekennzeichnet, daß** das Reaktionsmilieu, in welchem die Depolimerisationsreaktion durchgeführt wird, mit gesättigtem Wasserdampf angereichert wird, wenn in einem vorbestimmten Bereich des Reaktionsmilieus die Temperatur über 100°C liegt.

3. Verfahren nach Anspruch 1, **dadurch gekennzeichnet, daß** das Calciumoxyd in einem Verhältnis 1 Gew.-% bis 3 Gew.-% der zu behandelnden Reifen zugegeben wird.

4. Verfahren nach Anspruch 1, **dadurch gekennzeichnet, daß** die durch die Depolimerisation erzeugten Substanzen durch erzwungene Absaugung entfernt, komprimiert und einer Verbrennung zugeführt werden.

5. Verfahren nach Anspruch 1, **dadurch gekennzeichnet, daß** die Injektion von Luft (11) in die Depolimerisationsvorrichtung (3) unterbrochen wird, wenn die Temperatur der durch die Depolimerisation erzeugten Substanzen in Strömungsrichtung hinter der Depolimerisationsvorrichtung und vor der Verbrennungskammer (23) 170°C übersteigt.

6. Verfahren nach Anspruch 1, **dadurch gekennzeichnet, daß** es eine Kontrolle des Vorhandenseins der Verbrennung der brennbaren Substanzen, die durch die Depolimerisation erzeugt werden, in der Verbrennungskammer mit Hilfe von optischen Einrichtungen umfaßt.

7. Anlage zur Herstellung von brennbaren Substanzen nach dem Verfahren eines oder mehrerer der vorhergehenden Ansprüche, **dadurch gekennzeichnet, daß** sie folgende Bestandteile umfaßt:
- eine Depolimerisationsvorrichtung (3), der von oben zu behandelnde Reifen zugeführt werden, welche der Vorrichtung (3) durch eine Klappe (1) hindurch zugeführt werden, zu der sie mit Hilfe eines Förderbandes (2) transportiert werden, wobei die Vorrichtung in ihrem unteren Bereich einen Trichter zum Abführen der Rückstände in der Weise aufweist, daß zwischen ihren Innenwänden und dem Trichter ein Zwischenraum (100) mit einer Vielzahl von Leitungen (18) mit kleinem Durchmesser ausgebildet ist, die zur Verbindung des Zwischenraums (100) mit der Kammer der Depolimerisationsvorrichtung dienen,
- (3) einen Brenner (7) zum Durchführen der Verbrennung der Reifen,
- eine Vielzahl von Düsen (10) zum Einführen von Luft in die Depolimerisationsvorrichtung (3), der ein automatisches Ventil (11) zugeordnet ist, um eine Regelung des die Düsen (10) durchströmenden Luftdurchsatzes zu ermöglichen,
- eine Vielzahl von Zerstäubungsdüsen (90), die im Zwischenraum (100) der Depolimerisationsvorrichtung (3) angeordnet und von einem Elektroventil (12) gesteuert sind, um eine Zerstäubung von Wasser im Inneren des Zwischenraums (100) zu ermöglichen, wenn die Temperatur dieses Raumes einen vorbestimmten, von einem Fühler (38) ermittelten Wert erreicht, wobei dieser Fühler in diesem Zwischenraum angeordnet ist, um eine Verminderung der Innentemperatur in der Depolimerisationsvorrichtung zu bewirken, wenn diese Temperatur einen vorbestimmten Wert überschreitet, der von einem entsprechenden Fühler (6) erfaßt wird,
- einen Behälter (4) zum Aufnehmen von Calciumoxyd, der mit einer Abgabe-Dosiereinrichtung (5) versehen ist, um der Depolimerisationsvorrichtung eine geeignete Menge von Calciumoxyd gleichzeitig mit der Zufuhr von zu behandelnden Reifen zuzuführen,
- eine Leitung (14) zum Ansaugen der durch die Depolimerisation der Reifen erzeugten verbrennbaren Substanzen, die mit einem automatischen Dreiwege-Ventil (39) und einer Ansaugeinrichtung (15) außerhalb der Depolimerisationsvorrichtung verbunden ist, wobei diese Ansaugeinrichtung im Zusammenwirken mit der Leitung (14) geeignet ist, das Innere der Depolimerisationsvorrichtung (3) auf einem unter dem Atmosphärendruck liegenden Druck zu halten,
- eine Verbrennungskammer (23) in Strömungsrichtung hinter der Ansaugeinrichtung (15), wobei diese Kammer mit einem unabhängigen Hilfsbrenner (25) ausgestattet ist, dem ein Ventilator (24) zugeordnet ist, und dem Brenner (25) eine brennbare Substanz zugeführt wird, die von der in der Depolimerisationsvorrichtung (3) erzeugten brennbaren Substanz verschieden ist, und wobei diesem Brenner eine photoelektrische Zelle (26) zugeordnet ist, die dazu dient, das Vorhandensein einer Flamme in der Verbrennungskammer (23) zu erfassen, um das Zünden des Brenners (25) zu veranlassen, wenn die Flamme in der Verbrennungskammer (23) erlischt,
- ein Gebläse (27) mit veränderbarer Geschwindigkeit zum Zuführen von Verbrennungsluft durch entsprechende Elektroventile (28, 29) in Luftverteilungskammern (30, 31), die bezüglich der Verbrennungskammer (23) koaxial angeordnet und mit dieser durch radiale Kanäle (32, 33) verbunden sind, wobei die Achse von ersten Kanälen (32) in der Weise ausgerichtet ist, daß der Luft eine Drehbewegung aufgeprägt wird, die im wesentlichen zum Ausgangsabschnitt der Verbrennungskammer (23) hin gerichtet ist, und
- programmierbare elektronische Einrichtungen (70) für das Sammeln und Auswerten von Verfahrensparametern zur Steuerung der Arbeitseinrichtungen.

8. Anlage nach Anspruch 7, **dadurch gekennzeichnet, daß** sie eine Expansionskammer (34), einen Ringkranz (38) zum Beschleunigen der Produkte am Ausgang der Verbrennungskammer (23) und eine Leitung (35) umfaßt, die dazu dient, die heißen Verbrennungsprodukte des Ausgangs der Verbrennungskammer (23) der zu versorgenden Verwendungseinrichtung zuzuführen.

9. Anlage nach Anspruch 7, **dadurch gekennzeichnet, daß** die Abgabevorrichtung (5) in der Weise steuerbar ist, daß in die Depolimerisationsvorrichtung (3) eine Menge des Calciumoxyds eingeführt wird, die gleich 1 Gew.-% bis 3 Gew.-% der zu behandelnden Reifen ist.

10. Anlage nach Anspruch 7, **dadurch gekennzeichnet, daß** dem Motor des Gebläses (27) eine Frequenzsteuereinrichtung zugeordnet ist, die ihrerseits von einer geeigneten Meßeinrichtung (16) für die Konzentration des Sauerstoffs und des Kohlenoxyds im Abgas gesteuert wird.

11. Anlage nach Anspruch 10, **dadurch gekennzeichnet, daß** sie eine Meßvorrichtung (20) zum Ermitteln der Temperatur der Substanzen am Ausgang der Ansaugeinrichtung (15) umfaßt.

12. Anlage nach Anspruch 7, **dadurch gekennzeichnet, daß** der Boden des Trichters der Depolimerisationsvorrichtung von einer Klappe (19) gebildet wird, der ein Betätigungszylinder (37) zugeordnet ist, um periodisch die Asche und die metallischen Rückstände der Depolimerisationsvorrichtung (3) abzuführen.

13. Anlage nach Anspruch 7, **dadurch gekennzeichnet, daß** die Ansaugvorrichtung (15) mit der Verbrennungskammer (23) über eine Leitung (50) verbunden ist, deren Ende im Bereich der Kammer (23) mit einer Düse (40) versehen ist.

## Claims

1. Method for producing combustible substances, characterised in that it consists of depolymerising the rubber from a predetermined quantity of tyres in a depolymerisation device at a pressure of 10 to 40 mbar below atmospheric pressure and at a temperature of between 100 and 130°C, control of the said depolymerisation temperature being obtained by the injection of air where the said temperature goes below 100°C and the spraying of steam where the said temperature exceeds 130°C, and in that the depolymerisation is preceded by the addition of a predetermined quantity of calcium oxide.

2. Method according to Claim 1, characterised in that the reaction medium in which the said depolymerisation reaction is effected is enriched with saturated steam when, in a predetermined part of the reaction medium, the temperature is above 100°C.

3. Method according to Claim 1, characterised in that the said calcium oxide is added at a rate of 1% and 3% by weight of the tyres to be processed.

4. Method according to Claim 1, characterised in that the substances produced by the depolymerisation are taken away by forced suction, compressed and sent for combustion.

5. Method according to Claim 1, characterised in that the injection of air (11) into the depolymerisation device (3) is interrupted when the temperature of the substances produced by the depolymerisation downstream of the depolymerisation device and upstream of the combustion chamber (23) exceeds 170°C.

6. Method according to Claim 1, characterised in that it comprises checking, with optical means, the existence of the combustion of the combustible substances issuing from the said depolymerisation in the combustion chamber.

7. Installation for producing combustible substances, according to the method of one or more of the preceding claims, characterised in that it comprises:
- a depolymerisation device (3) fed from above with the tyres to be processed, which are introduced into the device (3) through a hatch (1) and are transported to the latter by means of a belt conveyor (2): the said device being equipped in its bottom part with a hopper for discharging the residues,
so as to form between its internal wall and the hopper an intermediate space (100) with a plurality of small-diameter pipes (18) for communication between, the intermediate space (100) and the chamber of the depolymerisation device (3);
- a burner (7) for initiating the combustion of the tyres,
- a plurality of nozzles (10) for introducing air into the depolymerisation device (3), which are slaved to an automatic valve (11) to enable the flow of air transmitted by the nozzles (10) to be regulated,
- a plurality of spray nozzles (90) housed in the intermediate space (100) of the depolymerisation device (3), which are controlled by a solenoid valve (12) to allow the spraying of water, inside the intermediate space (100), when the temperature of this space arrives at a predetermined value read by a sensor (38) placed in the said space, and to cause a reduction in the internal temperature in the depolymerisation device when it exceeds a predetermined value read by a corresponding sensor (6),
- a receptacle (4) for containing calcium oxide, which is equipped with an apportioning distributor (5) for introducing, into the said depolymerisation device, an appropriate quantity of calcium oxide simultaneously with the introduction of the tyres to be processed,
- a pipe (14) for the suction of the combustible substances produced by the depolymerisation of the tyres, which is connected to a three-outlet automatic valve (39) and to an extractor (15) external to the depolymerisation device, the said extractor, in cooperation with the pipe (14), being able to maintain the inside of the depolymerisation device (3) at a pressure below atmospheric pressure,
- a combustion chamber (23) downstream of the -said extractor (15), which is equipped with an independent auxiliary burner (25) associated with a fan (24): the said burner (25) being fed with a fuel different from that produced in the depolymerisation device (3) and slaved to a photoelectric cell (26) intended to detect the presence of a flame in the combustion chamber (23), so as to cause the triggering of the burner (25) in the event of extinction of the said flame in the combustion chamber (23),
- a variable-speed fan (27) for introducing combustion air through corresponding solenoid valves (28, 29) in air distribution chambers (30, 31) which are coaxial with respect to the combustion chamber (23) and connected to the latter by means of radial channels (32, 33), the axis of the first (32) being disposed so as to impart to the air a rotary movement substantially directed towards the outlet section of the combustion chamber (23),
- programmable electronic means (70) for acquiring and producing data on the process and for controlling the operational components.

8. Installation according to Claim 7, characterised in that it comprises an expansion chamber (34) and a circular annulus (38) for accelerating the products at the discharge from the combustion chamber (23) and a pipe (35) for taking the hot combustion products from the outlet from the combustion chamber (23) to the user to be supplied.

9. Installation according to Claim 7, characterised in that the said distributor (5) is adjustable, so as to introduce, into the depolymerisation device (3), a quantity of calcium oxide equal to 1% - 3% by weight of the tyres to be processed.

10. Installation according to Claim 7, characterised in that the motor of the said fan (27) is controlled by a frequency variator which is itself controlled by a suitable device (16) for measuring the quantity of oxygen and carbon monoxide in the fumes.

11. Installation according to Claim 10, characterised in that it comprises a sensor (20) for reading the temperature of the substances at the outlet from the extractor (15).

12. Installation according to Claim 7, characterised in that the base of the hopper of the depolymerisation device is formed by a hatch (19) controlled by an actuating cylinder (37) for periodically discharging the ash and metallic residues from the depolymerisation device (3).

13. Installation according to Claim 7, characterised in that the extractor (15) is connected to the combustion chamber (23) by means of a pipe (50) whose end at the chamber (23) is provided with a nozzle (40).
